# DEMANDE DE BREVET EUROPEEN

(11) **EP 2 439 503 A1**
(43) Date de publication de la demande: **11.04.2012**
(21) Numéro de dépôt: 10306063.8
(22) Date de dépôt: 30.09.2010
(51) Int. Cl.: G01G 19/00, G01B 11/02

(54) **Dispositif de détermination des trois dimensions d'un colis**

(71) Demandeur: Neopost Technologies, 92220 Bagneux (FR)
(72) Inventeur: Rico, Ruben, 75014 Paris (FR); Farlotti, Laurent, 49080 Pruniers (FR)
(74) Mandataire: David, Alain

(57) **Abrégé**

Procédé de détermination des trois dimensions d'un colis dans lequel le colis à mesurer (18) est adossé à un support trièdre de référence (14) et on acquière une image de ce support trièdre de référence comportant trois règles graduées (22) définissant les trois axes perpendiculaires du trièdre et on établit une table de correspondance entre la distance réelle entre chacune des graduations de ces règles et le nombre correspondant de pixels de l'image puis on acquière une image du colis disposé sur le support trièdre de référence, on détermine les bords de ce colis selon trois axes perpendiculaires, on compte alors le nombre de pixels formant chacun des bords du colis et on applique un coefficient correcteur issu de la table de correspondance pour obtenir les trois dimensions réelles recherchées.

## Description

### Domaine de la technique

La présente invention se rapporte au domaine du traitement de courrier et elle vise en particulier un dispositif de détermination automatique des dimensions d'un colis destiné ensuite à être affranchi dans un système d'affranchissement ou injecté dans un système de transport logistique.

### Art antérieur

Il est bien connu que la détermination du montant d'affranchissement d'un article de courrier dépend de plusieurs paramètres comme notamment l'adresse du destinataire, la classe de courrier, le service demandé, le poids ou les dimensions de cet article de courrier. L'adresse, la classe et le service peuvent être saisis au clavier du système d'affranchissement et le poids être obtenu avec une balance automatique interne ou externe au système d'affranchissement. Par contre, la détermination automatique des dimensions de l'article de courrier est plus délicate, notamment lorsqu'il s'agit de colis, et doit le plus souvent faire appel à des systèmes à ultrasons ou à diodes électroluminescentes par exemple.

Or, de tels systèmes qui sont relativement onéreux ne se justifient que pour des volumes d'affranchissement élevés et ne sont guère envisageables dans des systèmes d'affranchissement de bas de gamme (low cost) destinés à réaliser de un à quelques dizaines d'affranchissement de colis par jour. Une limitation de ces systèmes est en outre qu'ils ne prennent en compte, malgré leur coût, que les dimensions de trois bords du colis. Or, lorsque celui-ci n'est pas parallélépipédique, cela peut entraîner des erreurs dans le dimensionnement du colis.

### Objet et définition de l'invention

La présente invention vise ainsi à remédier aux inconvénients précités et à permettre la détermination à très faible coût des dimensions d'un colis. Un but de l'invention est de permettre cette détermination de façon simple mais néanmoins automatique.

Ces buts sont atteints conformément à l'invention avec un dispositif de détermination des trois dimensions d'un colis comportant :
- un support trièdre de référence formé d'au moins deux panneaux de coté verticaux perpendiculaires contre lesquels est adossé ledit colis et sur un des deux bords verticaux accolés duquel est disposée une règle verticale graduée définissant avec deux autres règles horizontales graduées disposées sur un bord horizontal de chacun desdits deux panneaux de coté en contact avec une surface support pour ledit colis, un repère orthonormé de coordonnées tridimensionnel,
- un capteur d'images pour acquérir une image dudit colis, adossé contre ledit support trièdre de référence, et
- une unité de traitement reliée audit capteur d'images pour déterminer les trois dimensions dudit colis à partir de ladite image ainsi acquise,
caractérisé en ce que ladite unité de traitement détermine, à partir d'une image dudit support trièdre de référence, d'une part un nombre de pixels correspondant à chacune des graduations desdites trois règles graduées et d'autre part des bords du colis selon trois axes perpendiculaires,
et ladite unité de traitement comporte une table de correspondance associant à chacune desdites graduations ledit nombre de pixels ainsi déterminé, de façon à obtenir lesdites trois dimensions dudit colis à partir d'un nombre de pixels correspondant à chacun desdits bords dudit colis.

La présence de règles graduées associées à l'image du colis permet de réaliser une calibration préalable de l'image du support et donc de disposer d'une table de correspondance permettant ensuite d'associer sur l'image du colis à mesurer une mesure en mm à chaque nombre de pixels formant les bords de ce colis.

Avantageusement, ladite table de correspondance comporte un coefficient correcteur associé à chacune desdites graduations et égal au rapport entre ledit nombre de pixels et une valeur en mm de ladite graduation associée.

De préférence, chacun desdits panneaux de coté comporte en outre un quadrillage uniforme ayant un pas prédéfini et ladite surface support peut être formée par un panneau de sol horizontal comportant un quadrillage uniforme ayant ledit pas prédéfini ou par un panneau de sol horizontal uni sans quadrillage.

Avantageusement, ledit capteur d'images est une Webcam munie d'un objectif grand angle et d'un autofocus.

Ladite unité de traitement peut être l'une quelconque des unités suivantes : ordinateur à usage général, ordinateur portable.

L'invention concerne également le procédé associé de détermination des trois dimensions d'un colis dans lequel le colis à mesurer est adossé à un support trièdre de référence formé d'au moins deux panneaux de coté verticaux perpendiculaires et sur un des deux bords verticaux accolés duquel est disposée une règle verticale graduée définissant avec deux autres règles horizontales graduées disposées sur un bord horizontal de chacun desdits deux panneaux de coté en contact avec une surface support pour ledit colis, un repère orthonormé de coordonnées tridimensionnel, caractérisé en ce qu'il comporte les étapes suivantes :
- acquisition par un capteur d'images d'une image dudit support trièdre de référence ,
- détermination sur l'image ainsi acquise, par une unité de traitement à laquelle ledit capteur d'image est relié, d'un nombre de pixels correspondant à chacune des graduations desdites trois règles graduées,
- établissement, dans ladite unité de traitement, d'une table de correspondance associant à chacune desdites graduations ledit nombre de pixels ainsi déterminé,
- acquisition par ledit capteur d'images d'une image du colis disposé sur ledit support trièdre de référence,
- détermination par ladite unité de traitement des bords du colis selon trois axes perpendiculaires, et
- comptage par ladite unité de traitement du nombre de pixels formant chacun des bords du colis et obtention des trois dimensions réelles recherchées à partir de ladite table de correspondance.

Avantageusement, ladite table de correspondance associe à chacune des graduations un coefficient correcteur égal au rapport entre ledit nombre de pixels et une valeur en mm de ladite graduation associée et l'étape de comptage par ladite unité de traitement du nombre de pixels formant chacun des bords du colis comprend en outre l'application d'un coefficient correcteur issu de ladite table de correspondance pour obtenir chacune des trois dimensions réelles recherchées.

Selon un mode de réalisation alternatif ou successif dans lequel chacun des deux panneaux de coté comportant en outre un quadrillage uniforme ayant un pas prédéfini, il comporte en outre une étape de détermination des contours dudit colis et de comptage du nombre de pas dudit quadrillage du support trièdre de référence entourant le colis pour obtenir au moins une dimension dudit colis.

En systématisant cette seconde étape de comptage, on peut vérifier que le colis est sensiblement parallélépipédique. En effet, dans le cas où la mesure des arrêtes parallèles diffère sensiblement, l'unité de traitement peut-être programmée pour prendre en compte la valeur minimale, maximale, la moyenne ou toute autre valeur déterminée à partir des valeurs mesurées, en fonction des spécifications du transporteur.

### Brève description des dessins

D'autres caractéristiques et avantages de l'invention ressortiront de la description suivante de modes de réalisation particuliers, donnés à titre d'exemples, en référence aux dessins annexés, sur lesquels :
- la figure 1 est une vue schématique illustrant un exemple de réalisation d'un dispositif de mesure des trois dimensions d'un colis selon l'invention ;
- la figure 1A est une loupe de la figure 1 ; et
- les figures 2A, 2B, 2C illustrent des étapes successives permettant la détermination des trois dimensions d'un colis avec le dispositif de mesure de la figure 1.

### Description détaillée de modes de réalisation préférentiels

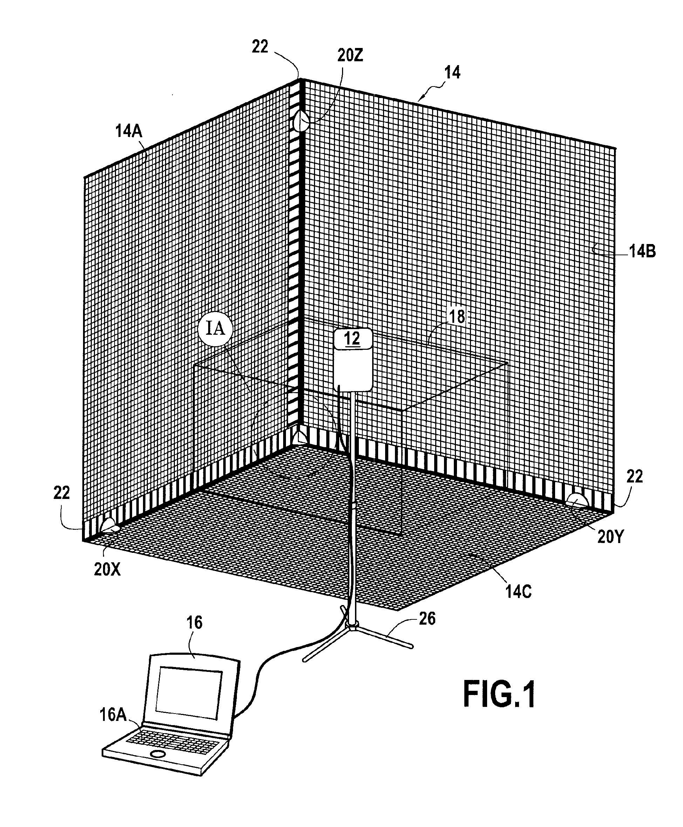

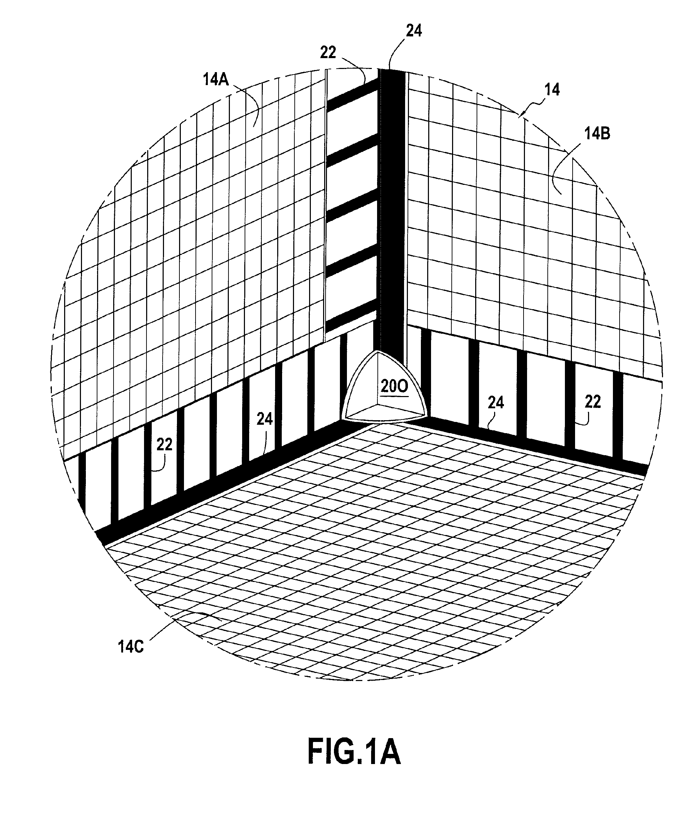

La figure 1 illustre le dispositif selon l'invention permettant à faible coût, grâce à des moyens simples, de déterminer les trois dimensions (longueur, largeur et hauteur) d'un colis.

Ce dispositif 10 est constitué d'un capteur d'images 12, d'un support trièdre de référence 14 et d'une unité de traitement 16 reliée au capteur d'images pour déterminer les trois dimensions d'un colis 18 reposant sur ce support à partir de son image acquise par le capteur d'images.

Le support trièdre de référence au coin duquel sera adossé le colis à mesurer est formé de trois panneaux 14A, 14B, 14C, cartonnés ou en plastique et suffisamment rigide pour bien y caler ce colis, chaque panneau étant disposé perpendiculairement aux deux autres de façon à définir à leurs jonctions les trois axes X, Y et Z d'un système orthonormé tridimensionnel de coordonnées. Les deux panneaux verticaux de coté 14A, 14B sont avantageusement munis d'un quadrillage de dimensions déterminées (par exemple formé de carrés de 5mmx5mm mais des repères, croix ou étoiles par exemple, espacés les uns des autres selon un pas prédéfini pourraient aussi convenir), le panneau horizontal de sol 14C formant la surface support pour le colis pouvant aussi comporter ce même quadrillage ou simplement comporter un fond uni noir. Vers l'extrémité de chacun de ces trois axes, sensiblement au niveau du bord extérieur périphérique du support trièdre de référence, est disposé un marqueur d'extrémité 20X, 20Y, 20Z (par exemple deux demi-cercle blanc de 10mm de diamètre) destiné à définir un point de référence optique lors de son acquisition par le capteur d'images 12. Un dernier marqueur 200 est aussi disposé au coin origine de ces trois axes. De plus, de part et d'autre de chacun de ces trois axes et comme le montre la loupe de la figure 1A sont disposées sur un coté une règle de mesure 22 (graduée par exemple avec des graduations tous les 5mm) et sur l'autre coté une bande 24 unie noire. On notera que ces quatre marqueurs individuels peuvent également être obtenus en traçant trois lignes blanches sur chacun des trois axes, l'extrémité de chacune de ces lignes formant un marqueur d'extrémité et l'intersection de ces trois lignes formant le marqueur d'origine.

Le capteur d'images 12 est avantageusement monté sur un trépied 26, ou tout autre support similaire (colonne, table, etc...), de préférence extérieure au support trièdre de référence, surélevée ou non par rapport à lui, de façon à obtenir une image intégrant obligatoirement au moins les trois marqueurs d'extrémité. Toutefois, pour ne pas être trop éloigné du colis à mesurer, le capteur d'images (de type CCD ou CMOS, par exemple une webcam d'une résolution d'au moins deux millions de pixels) est de préférence muni d'une optique grand angle (90° environ) et d'un autofocus pour permettre l'acquisition d'une image nette quelles que soient les dimensions du colis, de 5 à 70 cm de coté si l'on considère par exemple un support trièdre de référence de 80x80x80cm.

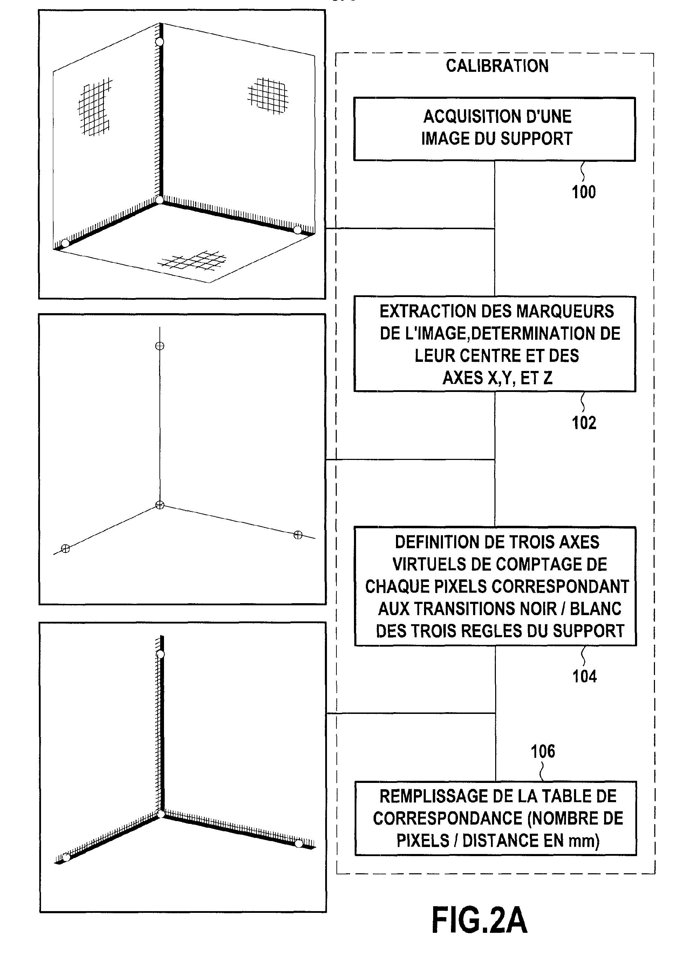

L'unité de traitement 16 peut classiquement être constituée d'un ordinateur à usage général, de type ordinateur personnel ou portable, comportant des moyens matériels et logiciels 16A adaptés à l'acquisition et au traitement des images issues du capteur d'images 12 pour déterminer les trois dimensions du colis selon un procédé de mesure particulier dont la description est maintenant faite au regard des figures 2A à 2C.

Sa mise en oeuvre nécessite tout d'abord la détermination d'une table de correspondance qui constitue une phase préalable du procédé de l'invention. Pour ce faire, le capteur d'images 12 fait dans une étape 100 l'acquisition d'une image du support trièdre de référence 14 comportant les quatre marqueurs et qui est alors transmise à l'unité de traitement pour analyse dans une étape 102. De façon connue, à partir de la bande noire 24 de chaque panneau, le quadrillage des trois panneaux (ou seulement deux si le troisième est uniformément noir) est effacé de sorte à ne laisser apparaitre que les quatre marqueurs blancs 20 afin d'en déterminer le centre O et les trois axes X, Y et Z les reliant (matérialisés par les trois traits reliant les croix de la figure 2A). Dans une étape suivante 104, une première ligne virtuelle de calibration parallèle à l'axe X joignant les centres du marqueur central 200 et du marqueur 20X est définie virtuellement et le nombre de pixels correspondant à chaque graduation de la règle 22 apparaissant successivement sur cette ligne entre les deux marqueurs est compté. Cette opération répétée avec les autres marqueurs pour les deux autres axes Y et Z permet de remplir la table de correspondance dans une étape 106. Par exemple, avec une règle graduée tous les 5 mm, on pourra obtenir la table suivante dans laquelle un coefficient correcteur (pix/mm) est calculé pour chaque graduation en fonction du nombre de pixels trouvé :

| **mm** | **X (pixel)** | **pix/mm** | **Y (pixel)** | **Pix/mm** | **Z (pixel)** | **pix/mm** |
|---|---|---|---|---|---|---|
| **5** | 6 | 1,20 | 5 | 1,00 | 6 | 1,20 |
| **10** | 12 | 1,20 | 11 | 1,10 | 12 | 1,20 |
| **15** | 18 | 1,20 | 17 | 1,13 | 18 | 1,20 |
| **20** | 24 | 1,20 | 23 | 1,15 | 25 | 1,25 |
| **25** | 29 | 1,16 | 29 | 1,16 | 31 | 1,24 |
| **30** | 35 | 1,17 | 36 | 1,20 | 38 | 1,27 |
| **35** | 40 | 1,14 | 42 | 1,20 | 45 | 1,29 |
| **40** | 46 | 1,15 | 48 | 1,20 | 52 | 1,30 |
| **Etc...** | | | | | | |

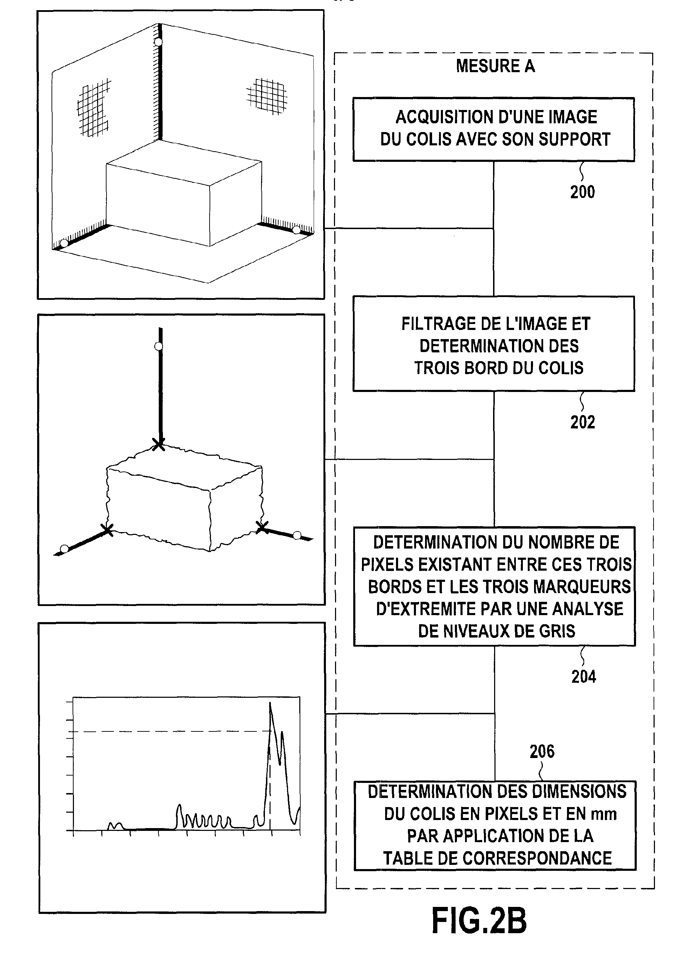

La table ainsi complétée, la première phase (A) de mesure du procédé peut être engagée. Pour ce faire, le colis dont les dimensions sont à mesurer est adossé au support trièdre de référence 14 et une image de ce colis visualisant aussi les trois marqueurs d'extrémités est acquise par le capteur d'images 12 dans une étape 200 et transmise à l'unité de traitement 16 pour analyse dans une étape 202. Celle-ci va alors définir, au dessus de la bande unie noire 24, une première ligne de mesure virtuelle parallèle à l'axe X et, au moyen d'un filtre d'images classique (par recherche de niveaux de gris), va déterminer le premier bord du colis (matérialisé par une croix sur la figure 2B) croisant ce premier axe. Cette opération répétée pour les deux autres axes Y et Z permet de retrouver ensuite les deux autres bords. Le nombre de pixels trouvé entre chaque bord et le marqueur d'extrémité associé permet alors, dans une étape 204, de déterminer en pixels les dimensions du colis sur chaque axe (puisque le nombre de pixels entre deux marqueurs d'un même axe est en effet connu) puis d'en déduire la valeur en mm à partir de la table de correspondance, dans une étape terminale 206.

On notera toutefois que lorsque le nombre de pixels trouvé ne correspond pas exactement à un nombre présent dans la table de correspondance, il y a lieu de prendre le coefficient correcteur le plus proche pour obtenir la valeur réelle en mm (par exemple, en référence à la table précédente, un bord trouvé à 31 pixels donnera une distance réelle de 31/1,16=26,72 mm).

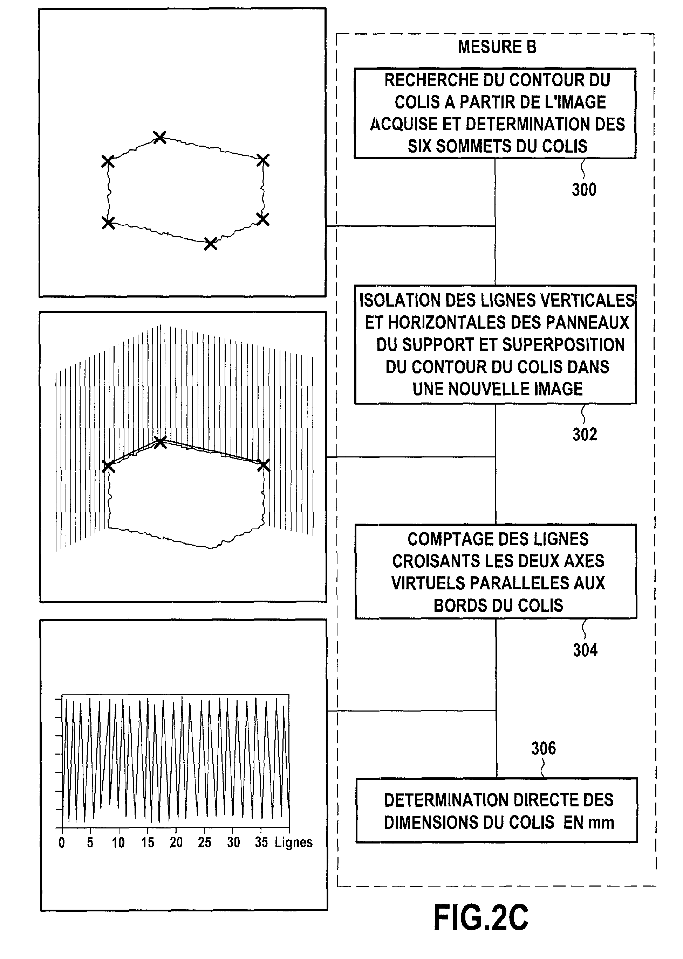

Ainsi, pour déterminer les trois dimensions d'un colis, il est nécessaire de rechercher les bords de ce colis selon trois axes perpendiculaires et de mesurer la distance entre ces bords et des marqueurs disposés à des emplacements prédéterminés. Toutefois, il se peut, du fait d'une luminosité ou d'un contraste insuffisant, que les mesures notamment sur les axes X et Y et plus rarement sur l'axe Z ne permettent pas de déterminer avec une précision suffisante les dimensions du colis selon ces axes. Dans ce cas, il sera procédé à une seconde phase (B) de mesure permettant de déterminer malgré tout ces dimensions. Pour cela, dans une étape 300, à partir de l'image acquise précédemment et au moyen d'une recherche de contour connue (analyse de Blob ou transformée de Hough par exemple), il sera procédé à la détermination du contour du colis et, celui-ci étant assimilé à un hexagone, à celle de ses six sommets visibles (matérialisés par des croix sur la figure 2C). Ensuite, dans une étape 302, de façon connue, les lignes horizontales et verticales des deux panneaux verticaux de cotés 14A, 14B sur lesquels le colis est accolé seront isolées et superposées dans une nouvelle image avec le contour du colis déterminé précédemment. Deux axes virtuels horizontaux seront alors tirés parallèlement aux deux cotés reliant les sommets supérieurs du colis et, dans une étape 304, pour chacun de ces deux axes, le nombre de lignes verticales croisées (une ligne correspondant à un pas du quadrillage) sera déterminé et il en sera alors directement déduit en mm les dimensions du colis selon l'axe correspondant dans une étape ultime 306.

On notera, qu'en pratique, la luminosité est toujours suffisante pour effectuer une mesure selon l'axe Z et donc déterminer la hauteur du colis lors de la première phase de mesure, de sorte que cette seconde phase de la mesure est surtout mise en oeuvre pour déterminer la largeur ou la longueur du colis en cas de contraste faible. On notera d'ailleurs que dans ce cas, le panneau horizontal 14C n'a pas besoin d'être quadrillé et peut donc être uniformément noir. Toutefois, si la configuration d'éclairement était autre, la dimension selon l'axe Z serait alors obtenue par le croissement des lignes horizontales (et non verticales) avec l'un des deux axes virtuels verticaux (et non horizontal) formés parallèlement aux bords verticaux du contour hexagonal du colis.

Selon ce procédé de l'invention, les dimensions d'un colis sont donc obtenues en comptant le nombre de pixels formant le colis selon les trois axes X, Y et Z et en appliquant à ce nombre un coefficient de correction extrait d'une table de correspondance (nombre de pixels/mm) et si, du fait de mauvaises conditions de luminosité ou de contraste, ce comptage s'avère impossible pour l'une au moins de ces dimensions, alors la ou les dimensions non mesurées sont alors obtenues en comptant simplement le nombre de carrés (ou de pas séparant les repères formant le quadrillage) entourant le colis. Le procédé peut donc ainsi se résumer par les étapes suivantes :
a. acquisition d'une image d'un support trièdre de référence pourvu de marqueurs définissant les trois axes perpendiculaires du trièdre et établissement d'une table de correspondance entre la distance réelle entre ces marqueurs et le nombre correspondant de pixels de l'image,
b. acquisition d'une image du colis disposé sur le support trièdre de référence,
c. détermination des bords de ce colis selon trois axes perpendiculaires,
d. si cette détermination s'est avérée possible, comptage du nombre de pixels formant chacun des bords du colis et application d'un coefficient correcteur issu de la table de correspondance pour obtenir les trois dimensions réelles recherchées, et
e. si cette détermination s'est avérée impossible, au moins pour une dimension, détermination des contours du colis et comptage du nombre de pas de quadrillage du support trièdre de référence entourant le colis et obtention de la dimension réelle manquante recherchée.

On notera que les étapes d et e peuvent aussi être effectuées successivement pour s'assurer de la validité des mesures, une étape de comparaison des mesures obtenues par les deux méthodes permettant ensuite de déterminer les dimensions à retenir en fonction des spécifications du transporteur.

De même, on notera également que la recherche de contour de l'étape e peut aussi être effectuée préalablement ou même substituée à l'étape c pour déterminer la position des bords du colis selon les trois axes du trièdre.

## Revendications

1. Procédé de détermination des trois dimensions d'un colis dans lequel le colis à mesurer est adossé à un support trièdre de référence (14) formé d'au moins deux panneaux de coté (14A, 14B) verticaux perpendiculaires et sur un des deux bords verticaux accolés duquel est disposée une règle verticale graduée (22) définissant avec deux autres règles horizontales graduées (22) disposées sur un bord horizontal de chacun desdits deux panneaux de coté en contact avec une surface support (14C) pour ledit colis, un repère orthonormé de coordonnées tridimensionnel (O,X,Y,Z), **caractérisé en ce qu'**il comporte les étapes suivantes :
. acquisition par un capteur d'images (12) d'une image dudit support trièdre,
. détermination sur l'image ainsi acquise, par une unité de traitement (16) à laquelle ledit capteur d'image est relié, d'un nombre de pixels correspondant à chacune des graduations desdites trois règles graduées,
. établissement, dans ladite unité de traitement, d'une table de correspondance associant à chacune desdites graduations ledit nombre de pixels ainsi déterminé
. acquisition par ledit capteur d'images d'une image du colis disposé sur ledit support trièdre de référence,
. détermination par ladite unité de traitement des bords du colis selon trois axes perpendiculaires, et
. comptage par ladite unité de traitement du nombre de pixels formant chacun des bords du colis et obtention des trois dimensions réelles recherchées à partir de ladite table de correspondance.

2. Procédé selon la revendication 1, **caractérisé en ce que** ladite table de correspondance associe à chacune des graduations un coefficient correcteur égal au rapport entre le nombre de pixel et une valeur en millimètre de ladite graduation associée.

3. Procédé selon la revendication 2, **caractérisé en ce que** l'étape de comptage par ladite unité de traitement du nombre de pixels formant chacun des bords du colis comprend en outre l'application d'un coefficient correcteur issu de ladite table de correspondance pour obtenir chacune des trois dimensions réelles recherchées.

4. Procédé selon la revendication 1, **caractérisé en ce que**, chacun des deux panneaux de coté comportant en outre un quadrillage uniforme ayant un pas prédéfini, il comporte en outre une étape de détermination des contours du colis et de comptage du nombre de pas dudit quadrillage du support trièdre de référence entourant le colis pour obtenir au moins une dimension dudit colis.

5. Procédé selon la revendication 4, **caractérisé en ce que** ladite surface support est formée par un panneau de sol horizontal uni sans quadrillage ou comportant un quadrillage uniforme ayant ledit pas prédéfini.

6. Dispositif de détermination des trois dimensions d'un colis comportant :
. un support trièdre de référence (14) formé d'au moins deux panneaux de coté (14A, 14B) verticaux perpendiculaires contre lesquels est adossé ledit colis (18) et sur un des deux bords verticaux accolés duquel est disposée une règle verticale graduée (22) définissant avec deux autres règles horizontales graduées (22) disposées sur un bord horizontal de chacun desdits deux panneaux de coté en contact avec une surface support (14C) pour ledit colis, un repère orthonormé de coordonnées tridimensionnel (O,X,Y,Z),
. un capteur d'images (12) pour acquérir une image dudit colis adossé contre ledit support trièdre de référence, et
. une unité de traitement (16) reliée audit capteur d'images pour déterminer les trois dimensions dudit colis à partir de ladite image ainsi acquise,
**caractérisé en ce que** ladite unité de traitement détermine, à partir d'une image dudit support trièdre de référence, d'une part un nombre de pixels correspondant à chacune des graduations desdites trois règles graduées et d'autre part des bords du colis selon trois axes perpendiculaires,
et ladite unité de traitement comporte une table de correspondance associant à chacune desdites graduations ledit nombre de pixels ainsi déterminé, de façon à obtenir lesdites trois dimensions dudit colis à partir d'un nombre de pixels correspondant à chacun desdits bords dudit colis.

7. Dispositif selon la revendication 6, **caractérisé en ce que** ladite table de correspondance comporte un coefficient correcteur associé à chacune desdites graduations et égal au rapport entre ledit nombre de pixels et une valeur en mm de ladite graduation associée.

8. Dispositif selon la revendication 6, **caractérisé en ce que** chacun desdits panneaux de coté comporte en outre un quadrillage uniforme ayant un pas prédéfini.

9. Dispositif selon la revendication 8, **caractérisé en ce que** ladite surface support est formée par un panneau de sol horizontal comportant un quadrillage uniforme ayant ledit pas prédéfini.

10. Dispositif selon la revendication 8, **caractérisé en ce que** ladite surface support est formée par un panneau de sol horizontal uni sans quadrillage.

11. Dispositif selon la revendication 6, **caractérisé en ce que** ledit capteur d'images est une Webcam munie d'un objectif grand angle et d'un autofocus.

12. Dispositif selon la revendication 6, **caractérisé en ce que** ladite unité de traitement est l'une quelconque des unités suivantes : ordinateur à usage général, ordinateur portable.

13. Système d'affranchissement d'articles de courrier comportant un dispositif de détermination des dimensions d'un colis selon l'une quelconque des revendications 6 à 12.
